# EUROPEAN PATENT SPECIFICATION

(11) **EP 1 844 623 B1**
(45) Date of publication and mention of the grant of the patent: **22.07.2009**
(21) Application number: 05807342.0
(22) Date of filing: 15.11.2005
(51) Int. Cl.: H04W 8/06

(54) **HOME LOCATION SERVER FOR ROAMERS**
HEIMATSERVER FÜR ROAMER
SERVEUR DE LOCALISATION D'ORIGINE POUR ABONNÉS ITINÉRANTS

(30) Priority: 24.11.2004 EP 04292769
(43) Date of publication of application: 17.10.2007
(73) Proprietor: Orange SA, 75015 Paris Cedex 15 (FR)
(72) Inventor: BALON, Marc, B-1495 Villers-La-Ville (BE); GILLOT, David, B-1160 Brussels (BE); VERZELE, François, B-7700 Mouscron (BE); GOFFIN, Eddy, B-7181 Seneffe (BE)
(74) Representative: Thiel, Frédéric
(86) International application number: PCT/EP2005/012354
(87) International publication number: WO 2006/056364

(56) References cited:
- WO-A-20/04014101
- US-B1- 6 438 369
- "Digital cellular telecommunications system (Phase 2+) (GSM); Universal Mobile Telecommunications System (UMTS); Technical Report on the Gateway Location Register (3GPP TR 23.909 version 4.0.0 Release 4); ETSI TR 123 909" ETSI STANDARDS, EUROPEAN TELECOMMUNICATIONS STANDARDS INSTITUTE, SOPHIA-ANTIPO, FR, vol. 3-CN2;3-CN4, no. V400, March 2001 (2001-03), XP014005055 ISSN: 0000-0001

## Description

### Field of the Invention

The present invention relates to telecommunications systems and methods which are arranged to support mobile radio communications in which mobile user equipment roam from a home mobile network to a visited mobile network.

### Background of the Invention

Mobile radio networks such as, for example, the Global System for Mobiles (GSM) and the Universal Mobile Telecommunications System (UMTS) provide a facility for mobile user equipment to communicate within a coverage area provided by the mobile radio network. A communications facility provided by the mobile radio network can be used to provide services to the mobile user equipment which include both voice and data communication services.

A mobile communications user typically subscribes to a network operator for which a contract is established with the effect that communications using a mobile terminal or mobile user equipment belonging to the user is arranged through the operator's mobile radio network. The mobile radio network to which a user has subscribed is referred to as a home mobile radio network. When the subscriber roams to another mobile radio network operating in accordance with, for example, the GSM standard, the subscriber having roamed to a second mobile radio network can communicate via the second mobile radio network. The second mobile radio network is referred to as a visited mobile radio network. The subscriber can roam to the visited mobile radio network provided that a roaming agreement exists between the visited mobile radio network and the home mobile radio network. Upon roaming to the visited mobile radio network a location up-date is performed by the roaming user equipment to the effect that all services which are to be provided to the roaming user equipment are stored in a Visitor location register of the visited mobile radio network. This is effected by an exchange of signalling data between the visited mobile radio network and a Home Location Server of the home mobile radio network. The signalling data identifies that the roaming user equipment of the subscriber is now attached to the visited mobile radio network. Thus, when a call is placed to the roaming user equipment, signalling data is exchanged between the visited mobile radio network and the home location server of the home mobile radio network, so that a call can be routed to the roaming user equipment on the visited mobile radio network using an MSRN (Mobile Subscriber Roaming Number).

If a user equipment has roamed to a different country then in order to place a call with the roaming user equipment then it is necessary to communication signalling data back to the home mobile radio network. This may therefore require up to two international or inter-network traffic links for one traffic connection between a calling user equipment and the roaming user equipment even though both the calling and the roaming user equipment are registered within the same mobile radio network (visited mobile radio network).

European patent EP 1 379 096 A1 discloses a telecommunications system in which a roaming home location server (referred to in this disclosure as an optimal routing database) is arranged to monitor signalling data exchanged between the visited mobile network and the home mobile network, when a roaming mobile user equipment registers with a visited mobile network. When the roaming mobile user equipment registers with the visited mobile network, signalling data is exchanged between the VLR of the visited mobile network and the HLR of the home mobile network. The roaming home location server monitors the signalling data communicated between the VLR of the visited network and the HLR of the home network. The roaming home location server stores signalling data relevant to call routing such as user profile data of the subscriber and an address of a central switching function (Visited Mobile Switching Centre and associated visited location server) with which the mobile subscriber is currently attached. As a result, when a call is placed to the roaming user equipment, the roaming home location server is interrogated for routing information to complete a call initiated by a calling terminal. The routing information is provided to the mobile central switching function of the visited mobile network from the roaming home location subscriber with the effect that routing of a call from a user equipment operating on the same visited mobile radio network can be placed to the roaming user equipment on the visited mobile radio network without a requirement to interrogate the home mobile radio network.

The telecommunications system disclosed in EP 1 379 096 A1 addresses a problem associated with optimal routing of call placement to a roaming user equipment However, services which can be offered to roaming user equipment utilising the telecommunications system disclosed in EP 1 379 096 are relatively limited.

WO 2004/014101 discloses a system for redirecting wireless network traffic. The system determines when a roaming mobile user equipment initiates a registration attempt with a non-preferred network and causes the roaming mobile user equipment to initiate a registration attempt with a preferred network.

### Summary of Invention

According to the present invention there is provided a telecommunications system comprising a first home mobile radio network and a second visited mobile radio network. The first home mobile radio network includes a home location server operable to maintain subscriber information data identifying mobile user equipment, which have subscribed to the first home mobile radio network. The second visited mobile radio network includes a visitor location server operable to maintain data identifying mobile user equipment which have roamed to the second visited mobile network. The roaming home location server is operable to receive signalling data communicated between the home location server of the first home mobile radio network and the visitor location server of the second visited mobile network. The signalling data is associated with informing the home location server of the location of a mobile user equipment which has roamed to the second visited mobile network. The signalling data received by the roaming home location server from the visitor location server of the second visited mobile network includes a request to register the roaming mobile user equipment with the visitor location server of the second visited mobile network. The roaming home location server is operable to generate request signalling data representing the request to register the roaming user equipment with the visitor location server of the second visited mobile network and to communicate the request signalling data to the home location server of the first home mobile radio network. In response to rejection signalling data representing a rejection of the request to register the roaming mobile user equipment with the visitor location server of the second visited mobile network, the roaming home location server is operable to generate further request signalling data which has an effect of causing the home location server of the first home mobile network to accept the registration of the roaming mobile user equipment with the visitor location register of the second visited mobile radio network.

A roaming home location server according to an aspect of the present invention provides a facility to prevent or at least hinder a home location server of a mobile subscriber's home network from rejecting the mobile subscriber from attaching itself to a visited mobile network. As disclosed in WO 2004/014101 identified above, it is known to provide an arrangement within a home location server of a home mobile network of a mobile subscriber, which rejects a location update of the mobile subscriber to a visited network, when the visited network is not the preferred network of the home mobile network. The roaming home location server within the visited mobile network can therefore counter the attempt to reject the location update by repeating the registration request until the location update to the visited mobile network is accepted by the home location server. In one example the registration request is repeated a predetermined number of times, after which the home location server accepts the location update.

The terms home location server and visitor location server have been used to infer a generic element for network elements which perform a function of holding subscriber information about mobile user equipment within a home mobile network and a visited mobile network respectively. For example, according to the GSM standard, these network elements are referred to as a home location register and visitor location register respectively. However, according to the UMTS standard, these network elements are referred to as a home subscriber server and visitor subscriber server respectively. It will be appreciated therefore that the terms home location server and visitor location server are intended to include both these example network elements for GSM and UMTS as well as corresponding elements in architectures according to other standards. In the following description, Home Location Register (HLR) is equivalent Home Location Server (HLS), Visitor Location Register (VLR) is equivalent to Visitor Location Server (VLS) and Roaming-Home Location Register (R-HLR) is equivalent to Roaming-Home Location Server (R-HLS).

Various further aspects and features of the present inventions are defined in the appended claims.

### Brief Description of the Drawings

Embodiments of the present invention will now be described by way of example only with reference to the accompanying drawings where like parts are provided with corresponding reference numerals and in which:
Figure 1 is a schematic block diagram illustrating a telecommunications system which includes a home mobile network and a visited mobile network;
Figure 2 is a schematic block diagram of a roaming home location register;
Figure 3 is a schematic block diagram illustrating a simplified representation of the telecommunications system shown in Figure 1 operating to optimise routing of a call using the roaming home location register;
Figure 4 is a schematic block diagram illustrating a simplified representation of the telecommunications system shown in Figure 1 operating to optimise routing of a call, without using service interaction;
Figure 5 is a schematic block diagram illustrating a simplified representation of the telecommunications system shown in Figure 1 operating to optimise routing of a call with service interaction;
Figure 6 is a schematic block diagram illustrating a simplified representation of the telecommunications system shown in Figure 1 operating to implement some adapted GSM services with the effect of limiting inter-working between the visited mobile network and the home mobile network;
Figure 7 is a schematic block diagram illustrating a simplified representation of the telecommunications system shown in Figure 1 operating to optimise routing of an SMS message to a roaming mobile terminal;
Figure 8 is a schematic block diagram illustrating a simplified representation of the telecommunications system shown in Figure 1 operating to provide location based services using the roaming home location register;
Figure 9 is a schematic block diagram illustrating a simplified representation of the telecommunications system shown in Figure 1 operating to provide an unstructured supplementary data service using a roaming home location register;
Figure 10 is a schematic block diagram illustrating a simplified representation of the telecommunications system shown in Figure 1 operating to intercept selectively signalling data to redirect a roaming mobile user equipment onto the visited mobile network; and
Figure 11 is a schematic block diagram illustrating the operation of the roaming home location register when performing a location update and implementing call related procedures in order to build statistics relating to roaming mobile terminals.

### Description of Example Embodiments

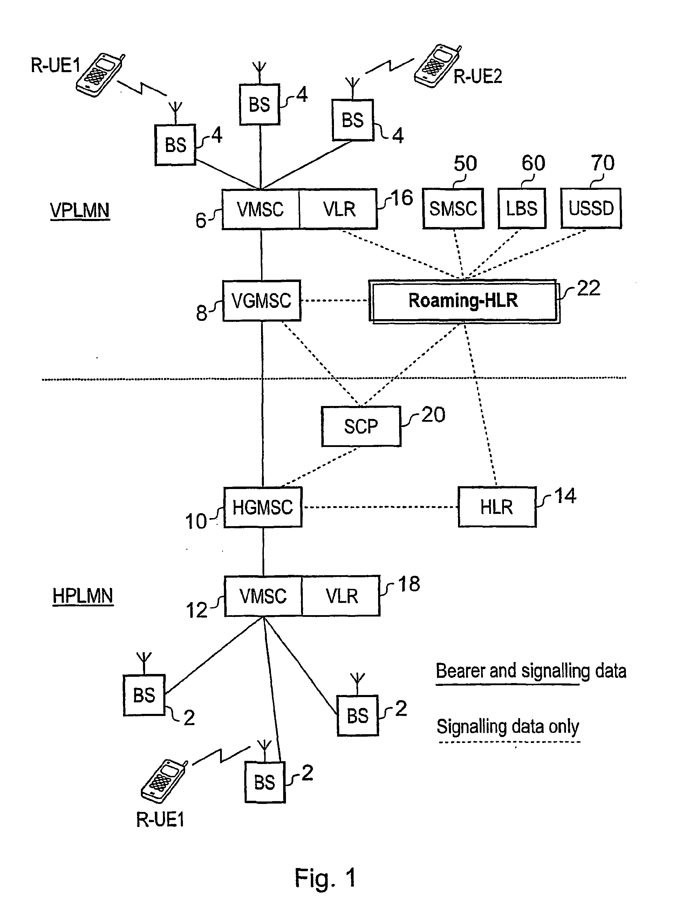

Figure 1 provides an example telecommunications system in which a roaming mobile user equipment (R-UE) roams from a home mobile radio network (HPLMN) to a visited mobile radio network (VPLMN). As shown in Figure 1 the mobile user equipment UE1 may be operated by a user which has subscribed to an operator's mobile radio network which is therefore the home mobile radio network (HPLMN). Base stations 2 of the home mobile radio network HPLMN provide a facility for radio communications with the mobile user equipment UE1 in accordance for example with the GSM standard. According to known arrangements if the mobile user equipment UE1 roams to a visited mobile radio network (VPLMN) then radio communications may again be effected via an interface provided by base stations 4 of the visited mobile network VPLMN.

Although Figure 1 provides an example of a telecommunications system according to the GSM standard, it will be appreciated that embodiments of the present invention find application with other types of mobile networks such as for example 2.5G and 3G operating in accordance with the Universal Mobile Telecommunications System (UMTS).

Once a user equipment has roamed to the visited mobile radio network VPLMN a location up-date procedure is followed in accordance with, for example, the GSM standard. According to this location update service a VLR (Visited Location Register) 16, associated to an MSC (Mobile Switching Centre) 6 of the visited network VPLMN, communicates signalling data to register with a home location register 14 of the home mobile network HPLMN that the roaming user equipment R_UE1 is now enjoying communications via the visited mobile radio network. Following an established location up-date procedure, signalling data is also communicated to a visitor location register 16 within the visited mobile radio network VPLMN to register the roaming user equipment R_UE1 with the visitor location register 16 of the visited mobile network VPLMN.

As shown in Figure 1, bearer and signalling data is communicated between network elements connected by a solid line. Signalling data is communicated via a dashed line. Therefore bearer and signalling data is communicated via a gateway MSC (GMSC) 8 of the visited mobile network VPLMN via a Gateway MSC of the home network HPLMN (HGMSC) 10 and an MSC of the home network (HMSC) 12

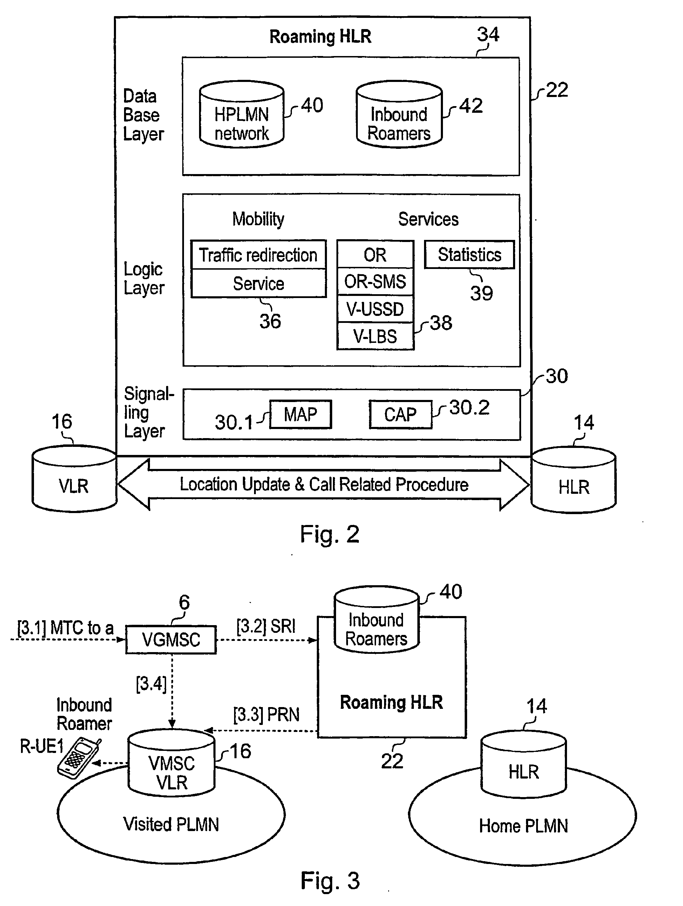

According to embodiments of the present technique the visited mobile network VPLMN is provided with a roaming home location server 22. The roaming home location server 22 is shown in more detail in Figure 2. In Figure 2 the roaming home location server 22 is shown to include a signalling layer 30, a logic layer 32 and a database layer 34. The signalling layer 30 is arranged to monitor and in some examples intercept signalling data exchanged between different nodes of the visited mobile radio network VPLMN (VMSC 6, VLR 14, SMSC 50, LBS 60 USSD 70) and the home location server of the home mobile network HPLMN. The signalling layer may include a Mobile Application Part (MAP) component 30.1 and a CAMEL Application Part (CAP) component 30.2. Typically, the signalling data intercepted and generated by the signalling layer 30 will conform to the signalling system 7 (SS7) standard. The signalling data according to the SS7 standard may be generated in accordance with a Mobile Application Part (MAP) and CAMEL (CAP) standards.

The logic layer 32 includes functionality to execute services, which are provided by the roaming home location server 22. The logic layer 32 includes mobility service logic 36, services logic 38 and a statistics module 39 which as will be explained shortly are arranged to provide added value services to a roaming user equipment.

The database layer 34 includes an inbound roamers database 40 and a home mobile network database 42. As will be explained shortly in connection with the added value services provided by the service logic layer 32, the inbound roamers database and the home mobile network database 40, 42 are arranged to store data which is utilised by the services provided by the logic layer 32. Inbound roamers database 40 will contain all data related to roaming user equipment, like roaming user profile (IMSI, MSISDN, HLR number, VLR number, VMSC number, bearer and supplementary services, CAMEL information) and roaming user statistics (associated traffic for speech, SMS). Home mobile network database 42 will contain the static configuration for every Home mobile network, defining which home location server services are opened with the home mobile network HPLMN.

### Optimal Routing

As explained above, European patent EP 1 379 096 discloses an arrangement in which a roaming home location register (called OR-DB) is arranged to provide routing information in response to a Send Routing Information (SRI) MAP request. The SRI is usually sent to the home location register of the home network HPLMN. However, the home location register of the home mobile network HPLMN is replaced by the roaming home location server 22, so that the roaming home location server 22 (R-HLR) provides the Mobile Subscriber Roaming Number (MRSN) from the visited mobile switching centre (VMSC) 6 associated with a visitor location register of the visited mobile network VPLMN. Using the MRSN a mobile terminated call can be completed to the roaming user equipment R_UE1. This known arrangement as disclosed in EP 1 379 096 A1 is represented in Figure 3. Figure 3 illustrates a signalling message exchange which can be used to perform optimal routing. The signalling messages are summarised as follows:
S3.1: A mobile terminated call to a roaming mobile user equipment R_UE1 is signalled to the VGMSC 8.
S3.2: The VGMSC 8 sends an SRI request to the roaming home location server 22.
S3.3: In response to the SRI message in step S3.2 the roaming home location server 22 sends a Provide Roaming Number MAP (PRN) message to the visited mobile switching centre 6, as defined for this mobile user into the inbound roamers database 40.
S3.4: The MSRN number is provided by the visited mobile switching centre (VMSC) 6 to the roaming home location server 22.
S3.5: The MSRN number is relayed to the visited gateway mobile switching centre (VGMSC) 8.
S3.6: Accordingly, with the MRSN number, the call will be routed to visited mobile switching centre (VMSC) 6 and finally to the roaming user equipment R_UE1.

Embodiments of the present invention provide an enhanced facility for optimal routing to provide additional services to the roaming user equipment and/or the home or visited mobile network operators. For example, services such as real time billing or filtering functions can be provided to a mobile terminating call. This is effected by providing service interaction with the home mobile network HPLMN, so that services can be provided for example in accordance with CAMEL Terminating-Camel Subscriber Mark (T-CSI). In particular, according to the present technique, optimal routing can be performed in dependence upon whether the operators of the visited mobile network and the home mobile network have agreed to allow optimal routing or not, as defined in home mobile network database 42. Accordingly, there are three possible scenarios, these are:
- Optimal routing is closed;
- Optimal routing is open without home mobile network HPLMN interaction (optimal routing is applied strictly without agreement) but limited to roaming mobile users located in the same mobile network;
- Optimal routing is open selectively only for some subscribers with the home mobile network HPLMN interaction in accordance with an agreement between operators.

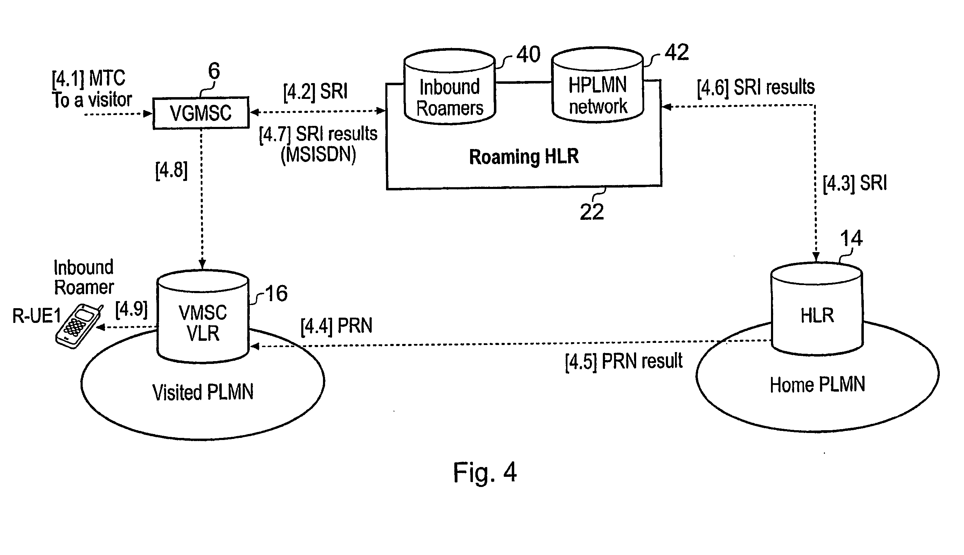

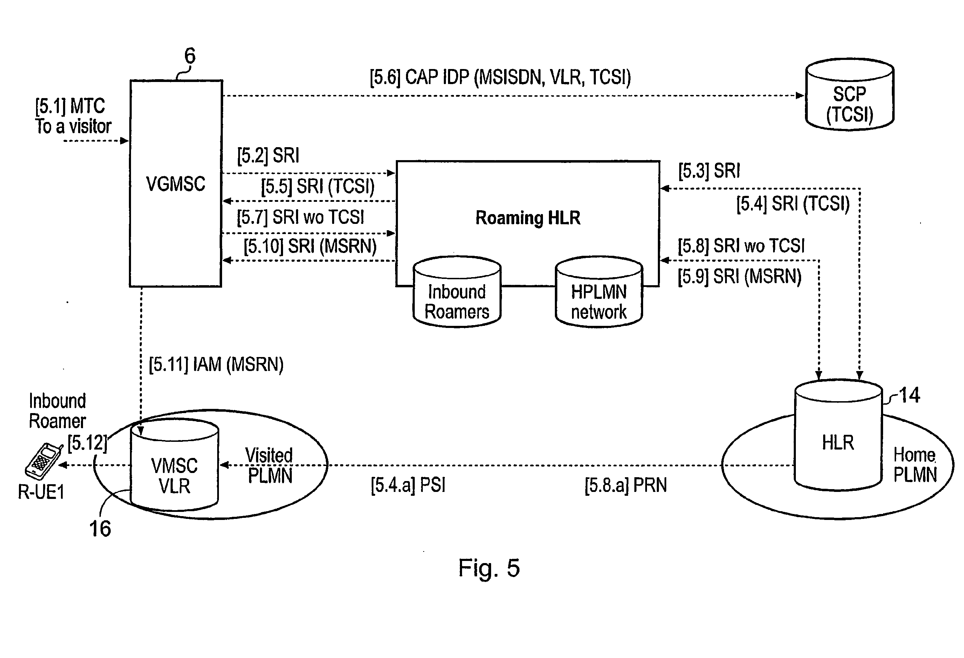

According to the present technique enhanced services can be provided where optimal routing is operated selectively. For this example there are two possible scenarios which are depicted in Figures 4 and 5. In Figure 4, a scenario is considered in which no service interaction is provided to the mobile user equipment. In order to determine whether services should be provided to the user equipment, service logic within the service logic layer 32 of the roaming home location server 22 is arranged to exchange signalling data with the home location register 14 of the home mobile network HPLMN. For the example of service interaction in Figure 5, subscriber information data may be received from the home location register of the home mobile network HPLMN in response to the SRI message. Therefore, following a step identified as S5.2 the roaming home location server 22 relays the SRI to the home location register of the home network HPLMN in order to retrieve subscriber information. If no terminating services are detected, for example based on a Terminating CAMEL Subscription Information (T-CSI) analysis, then optimal routing may or may not be performed depending on certain criteria. For example if the Mobile Subscriber Roaming Number (MSRN) belongs to the same network then optimal routing may be performed. Additionally, if the mobile subscriber roaming number belongs to the same country then optimal routing may be performed. If optimal routing is possible then the MSRN is returned to the VGMSC 8 of the visited mobile network VPLMN so that the mobile terminated call can be completed. If not then the MSISDN number is returned. Thus the process steps appearing in Figure 4 are summarised as follows:
S4.1: A mobile terminated call to roaming mobile user equipment R_UE1 is signalled to the visited gateway mobile switching centre (VGMSC) 8.
S4.2: The VGMSC 8 sends an SRI request to the roaming home location server 22.
S4.3: In response to the SRI message in step S4.2 the roaming home location server 22 forwards the SRI message to the home location register 14.
S4.4 The home location register 14 sends a Provide Roaming Number MAP message to the visited mobile switching centre 6.
S4.5: The MSRN number is provided by the visited mobile switching centre (VMSC) 6 to the home location server 14.
S4.6: The MSRN number is provided by the home location server 14 to the roaming home location server 22.
S4.7:. The roaming home location server 22 will define if optimal routing is possible, based on MSRN (roaming mobile user location) and home mobile network database 42 configuration (Optimal routing allow for such operator). If optimal routing is possible then the MSRN is returned whereas if optimal routing is not possible then the MSISDN number is sent to the visited gateway mobile switching centre (VGMSC) 8.
S4.8 If optimal routing is possible then the roaming number (MSRN) is then forwarded from the VGMSC 8 to the VMSC 6 in order to reach the roaming user equipment R_UE1.

Optimisation could be foreseen if up-to-date location information is found into the inbound roamers database 4040 for the roaming user equipment R_UE1. S4.3 will not be performed and S4.4 could be directly initiated by the roaming home location server, in order to avoid the home location server intervention.

For the example where service interaction is allowed then the roaming home location server 22 will relay the SRI to the home location register in order to retrieve the subscriber location information and terminating service information based on a T-CSI analysis as explained above. Therefore, based on the location of the roaming user equipment optimal routing could be enabled if the calling party and the roaming user equipment are on the same network or on the same country or optimal routing could be disabled. Decision logic contained in the home network database 42 within the roaming home location server 22 provides parameter data to the decision logic within the logic layer 32 of the roaming home location server 22. The decision logic within the service logic layer 32 of the roaming home location server 22 therefore determines whether optimal routing can be performed in dependence upon the location of the roaming mobile user equipment.

In other examples optimal routing may be enabled in accordance with the location of the mobile user equipment in combination with services which are to be provided to the roaming mobile user equipment as provided by the home location register of the home network 14. Figure 5 illustrates an exchange of signalling data which might typically be performed in order to determine whether optimal routing is possible. The signalling messages exchanged in Figure 5 are summarised as follows:
S5.1: A mobile terminated call to the roaming mobile user equipment R_UE1 is signalled to the visited gateway mobile switching centre (VGMSC) 8.
S5.2: The VGMSC 8 sends an SRI request to the roaming home location server 22.
S5.3: In response to the SRI message in step S5.2 the roaming home location server forwards the SRI message to the home location register 14.
S5.4 The home location register 14 sends a Provide Subscriber Information MAP message (PSI) to the visited mobile switching centre (VMSC) 6. The home location register 14 will relay the answer to the roaming home location server 22, including the potential T-CSI information.
S5.5: The roaming home location server 22 will define if optimal routing is possible, based on T-CSI (roaming mobile user CAMEL profile information) and the home mobile network database 42 configuration (indicating that optimal routing is allowed for such an operator, and such a T-CSI profile). If optimal routing is possible then the T-CSI is returned whereas if optimal routing is not possible then the MSISDN number is sent to the visited gateway mobile switching centre (VGMSC).
S5.6: Based on the T-CSI, the VGMSC will interact with the SCP 20 of the home network HPLMN.
S5.7: The VGMSC 8 sends a second SRI request to the roaming home location server 22, in order to retrieve the roaming mobile user location (MSRN).
S5.8: In response to the SRI message in step S5.7 the roaming home location server 22 forwards the SRI message to the home location register 14.
S5.9 The home location register 14 sends a Provide Roaming Number MAP message to the visited mobile switching centre 6. The MSRN number is provided back to the home location register 14, and relayed to roaming home location server 22.
S5.10: The roaming home location server 22 will define if optimal routing is possible, based on MSRN (roaming mobile user location) and home mobile network database 42 configuration (Optimal routing allow for such operator). If optimal routing is possible then the MSRN is returned whereas if optimal routing is not possible then the MSISDN number is sent to the visited gateway mobile switching centre (VGMSC) 8.
S5.11: If optimal routing is possible then the roaming number (MSRN) is then forwarded from the VGMSC 8 to the VMSC 6 in order to reach the roaming user equipment R_UE1.

Optimisation could be foreseen if up-to-date location and subscriber information is found into the inbound roamers database 40 for the roaming user equipment R_UE1. S5.3 and 5.8 will not be performed and S5.4.a and S5.9.a could be directly initiated by the roaming home location server, in order to avoid the home location server intervention.

### Adapted Services to Limit Inter-working or induce new inbound services

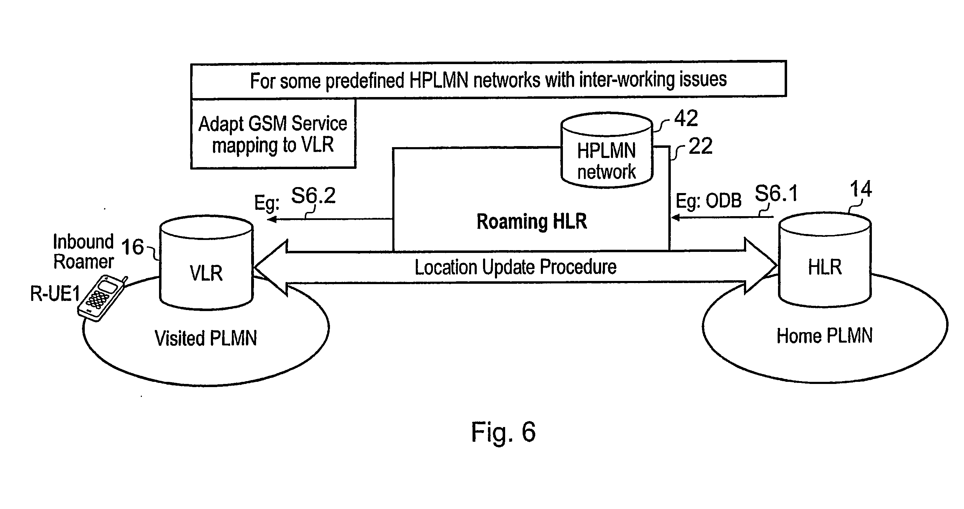

A further example illustrating the operation of the roaming home location server 22 to provide enhanced services to a mobile user equipment which has roamed to a visited network VPLMN is provided in Figure 6. Figure 6 provides an example in which the roaming home location server 22 adapts some of the GSM services or supplementary services or CAMEL marks in order to limit inter-working issues between the visited mobile network VPLMN and the home mobile network HPLMN to provide an improvement in controlling inbound services to the roaming user equipment. To this end, signalling data is exchanged between the roaming home location server 22 and the home location register 14 of the home mobile network HPLMN. As a result, subscriber information provided with the signalling data is stored in the inbound roamers database 40 which can be used to adapt the services which are provided to the user equipment within the visited network VPLMN, according to the configuration defined in home mobile network database 42.

In one example the roaming home location server 22 receives subscriber information indicating conditions for operator determined call barring. For example, mobile originated calls may be barred for premium rate services. Communicating the subscriber information data from the home location register 14 which is associated with a particular subscriber, to the home mobile network database 42 within the roaming home location server 22, the visited network is enabled with this call barring information. The call barring information can be applied to limit access of the roaming user equipment to such premium rate services. It is therefore possible to reduce a likelihood of fraud taking place by a mobile user equipment for example, making international calls via the visited mobile network VPLMN. As such a likelihood that fraud will take place using the mobile user equipment to access the visited mobile network without using an international carrier can be reduced. Alternatively, without operator determined call barring then a complete bar may be applied to the roaming user equipment preventing the roaming user equipment from making any mobile originated calls within the visited network.

In other example the roaming home location server 22 receives subscriber information from the home location server 14, could induce new services like CAMEL triggering to the visitor location server. This CAMEL trigger could be used to reroute the traffic to the roaming home location server 22 in order to check or modify call parameters, independently of voice or data calls.

### Optimised SMS Delivery

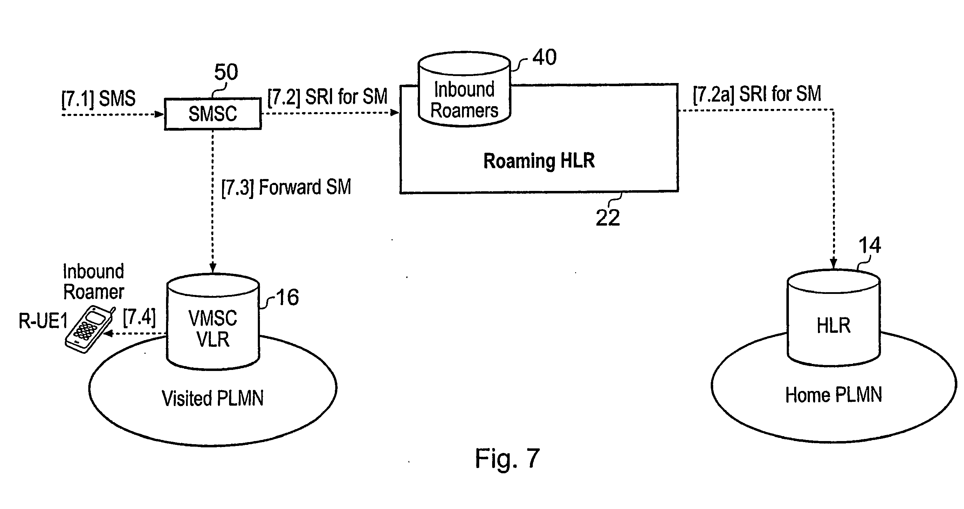

Figure 7 provides a further illustration of a route optimisation facility provided by the roaming home location server 22 for delivering a Short Message Service (SMS) datagram. As for the example illustrated in Figures 3, 4, and 5, Figure 7 provides an illustration of a facility for delivering SMS messages to the roaming user equipment R_UE1, located in the visited network. Since the roaming home location server 22 will take the place of the home location register 14 of the home network HPLMN, a more efficient delivery of SMS messages can be provided as illustrated for mobile terminated calls illustrated in Figures 4, 5 and 6. The signalling messages illustrated in Figure 7 are therefore summarised as follows:
S7.1: An SMS message is generated and communicated to an SMS-MSC (SMSC) 50 within the visited mobile network VPLMN.
S7.2: The SMSC 50 generates a Send Routing Information for SMS message (SRI for SM) to the roaming home location register 22. The roaming home location server 22 then interrogates the inbound roamers database 40 to determine whether the mobile subscriber roaming number is present within the visited network.
S7.2a: If the optimised SMS delivery is not authorised in home mobile network database 42 for this home network, or if the roaming user equipment R_UE1 is not present within the inbound roamers database 40 then the roaming home location server 22 relays the SRI for SM message to the home location register 14 within the home mobile network HPLMN. The SRI for SM includes the MSISDN number identifying the user equipment to which the SMS message is destined. The home location register can then reply with the mobile switching centre number to allow the SMS message to be routed to the roaming user equipment R_UE1.
S7.3: If the optimised SMS delivery is authorised in home mobile network database 42 for this home network and if the roaming user equipment R_UE1 is within the visited mobile network then the roaming home location server 22 will provide, as before, the mobile switching centre number to the SMSC 50 for delivering the SMS message to the visited mobile switching centre 6 for forwarding the message to the correct roaming user equipment R-UE1.
S7.4: The SMS message is then delivered to the roaming user equipment R_UE1.

### Location Based Services

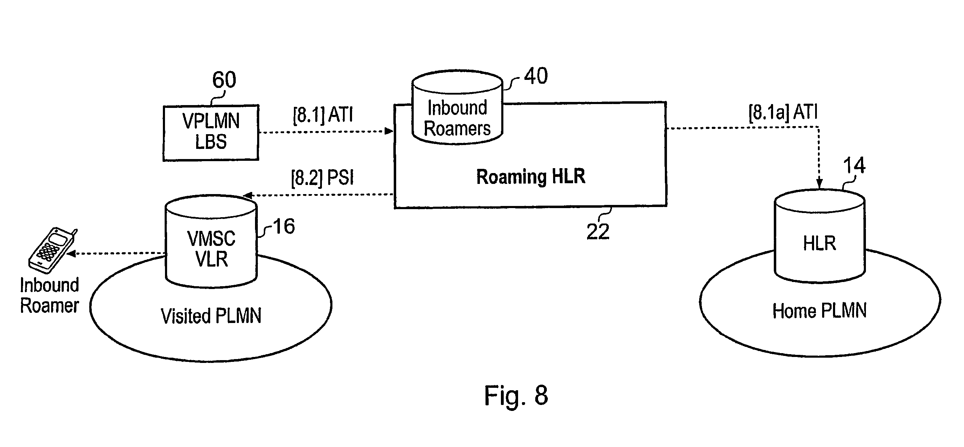

A further example in which enhanced services could be provided by a roaming home location server according to the present technique is illustrated in Figure 8. In Figure 8 location based services are provided to roaming mobile user equipment RUE1 located on the visited network. In Figure 8 the visited mobile network VPLMN is provided with a location based services server 60 which communicates an Any Time Interrogation (ATI) message to the roaming home location server 22 in order to retrieve the location of a roaming user equipment R_UE1 located in the visited network. The VLR location of the roaming user equipment is provided by the inbound roamers database 40. Accordingly, the location of the user equipment (Cell id or other) can be retrieved by sending to the appropriate visitor location register 16 a Provide Subscriber Information (PSI) message. Therefore, the process steps identifying signalling data, which is communicated, between the elements of Figure 8 are summarised as follows:
S8.1: An ATI message is generated from a location based services server 60 for communication to roaming home location server 22.
S8.1a: If the LBS is not authorised in home mobile network database 42 for this home network, or if the user equipment is not within the inbound roamers database 40 then the ATI message can be relayed to the home location register 14 of the home mobile network HPLMN.
S8.2: If the LBS is authorised in home mobile network database 42 for this home network, and if the inbound roamers database 40 contains users within a particular location then the message is relayed to the visited location register 16, using a PSI signalling data. Optionally, the location (like Cell id) stored into the visited location register 16 is updated by forcing a new paging message to roaming user equipment R-UE 1.
S8.3: The visited location register 16 will provide the location information to the roaming home location server 22, which will relay the location information to the location based services server 60.

### Unstructured Supplementary Service Data (USSD)

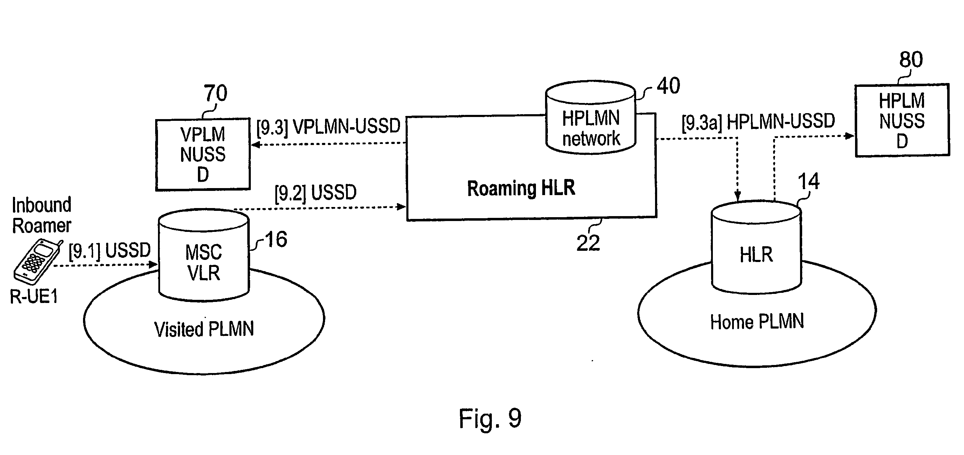

A further example in which the roaming home location server 22 can provide an enhanced facility to a roaming user equipment concerns the Unstructured Supplementary Service Data (USSD) which is a bearer developed for the GSM standard. According to this example, the roaming home location server 22 acts as a router for USSD messages. The roaming home location server 22 will then send USSD messages with addresses within a particular range to the home location register 14 within the home network. Correspondingly USSD messages with addresses within a particular range are sent to the visited mobile network VPLMN USSD gateway. An example arrangement is provided in Figure 9.

In Figure 9 a USSD message is communicated from the roaming user equipment R_UE1 to the MSC/visitor location register 16 of the visited mobile network VPLMN. The USSD message is then forwarded to the roaming home location server 22 which determines whether the USSD message should be delivered to a visited mobile network USSD server or the home location register 14 within the home mobile network HPLMN. The roaming home location register will compare the USSD strings with predetermined ranges of value and in accordance with the comparison route the message appropriately to a visited mobile network USSD server 70 or the home mobile network USSD server 80. The signalling messages exchanged between the elements illustrated in Figure 9 are therefore summarised as follows:
S9.1: The roaming user equipment R-UE1 generates a USSD message and communicates this message to the VMSC 6 within the visiting mobile network VPLMN.
S9.2: The VMSC 6 then forwards the USSD message to the roaming home location server 22.
S9.3: If the USSD is authorised in home mobile network database 42 for this home network, and if the USSD string range identifies that the USSD message is for visited PLMN then the roaming home location server 22 communicates the USSD message to the visited USSD server 70 for communication to the visited mobile network.
S9.3a: If the USSD is not authorised in home mobile network database 42 for this home network, or if the USSD string range identifies that a message is for a Home PLMN then the USSD message is forwarded to the home location server 14 within the home mobile network HPLMN.

An example illustration of partitioning of string ranges for the USSD messaging format, according to GSM standards, are defined in order to deliver services to different operators is illustrated in the table below:

| | |
|---|---|
| **70...79** | for National operations → the USSD string is operated only by the Home PLMN |
| **100...149** | for International operations → the Visited PLMN sends the USSD back to the Home PLMN |
| **150...195** | for International operations → the Visited PLMN operates the USSD string |

### Traffic Redirection and Filtering

Traffic Redirection is known to arrange for groups of operators to form an alliance or indeed to be owned by the same parent company, but also to improve seamless services. Accordingly, when a mobile subscriber roams to a different country then the operator of the home mobile network of that mobile subscriber would prefer the subscriber which has roamed to a visited mobile network VPLMN to communicate via a visited mobile network which is selected by the home network. Conventionally, once a mobile subscriber has arrived within a coverage area provided by a visited mobile network then in accordance with a predetermined order the mobile user equipment of the subscriber is arranged to attach to the visited mobile network which is available. Furthermore the mobile user equipment is arranged to attach to one of an available group of mobile networks in a preferred order. The preferred order is programmed into the Subscriber Identity Module (SIM) of the mobile user equipment. However, the preferred mobile network may not be available to the mobile user equipment.

In order to force a roaming user equipment to a particular visited network it is known to provide a technique wherein a location update to a visited network of a non-preferred operator is rejected by the home network (home location server or other component) so that the user equipment will then try on another visited network with the effect that eventually the user equipment will force a location update to a preferred visited network. As mentioned above, such an arrangement is disclosed in International patent application WO 2004/01410A. A system and apparatus is disclosed for redirecting mobile subscribers which determines whether roaming mobile subscribers initiate a registration attempt to a non-preferred network. The roaming mobile subscribers are caused to initiate a registration to a preferred network by rejecting the registration attempt to the non-preferred network when a location update is performed to the home location register. According to the GSM standard for example if a location update is rejected four times by a home location register then the user equipment proceeds to try to register with a different network. Thus by forcing the mobile subscriber from a non-preferred network by rejecting the location update provided from the visitor location register a mobile subscriber may be forced to a preferred network, if available.

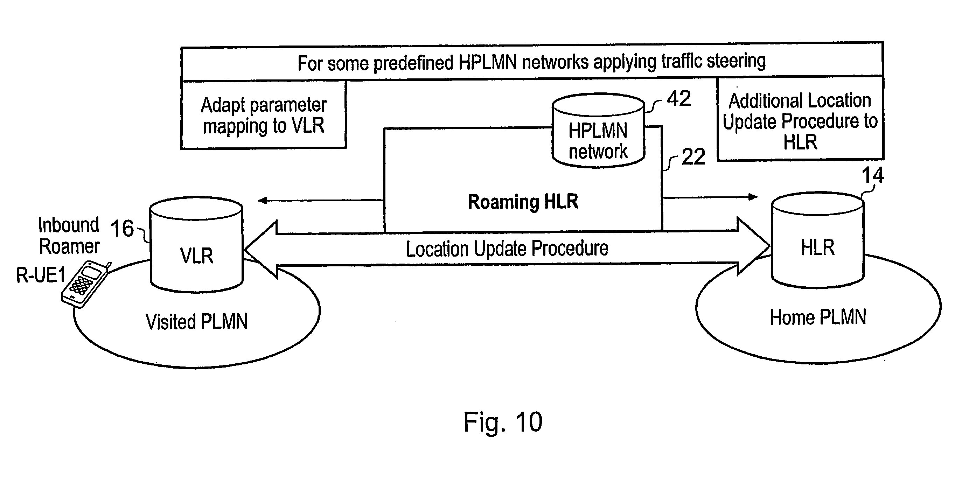

Figure 10 provides a further application of the roaming home location server according to the present technique. As illustrated in Figure 10, the roaming home location server 22 receives signalling messages sent between the visitor location register 16 on the visited mobile network VPLMN and the home location register 14 of the home mobile network HPLMN. According to one example in order to counter a home location register 14 rejecting a location update to a non-preferred network, the roaming home location server 22 is arranged to generate a repeated location update message for one genuine location update generated by the visitor location register 16. As such the home location register 14 will count a number of redirection attempts which the user equipment makes so that eventually after a predetermined number of attempts have been made the home location register 14 will accept the location update, as if the visited mobile network VPLMN were the only network available.

The roaming home location register 22 may also generate or adapt parameter mappings for communication to the visitor location register 16 within the visited mobile network. The roaming home location server 22 can translate the roaming not allowed into another error cause in order to avoid a conclusion that the visited mobile network is not allowed.

### Statistics

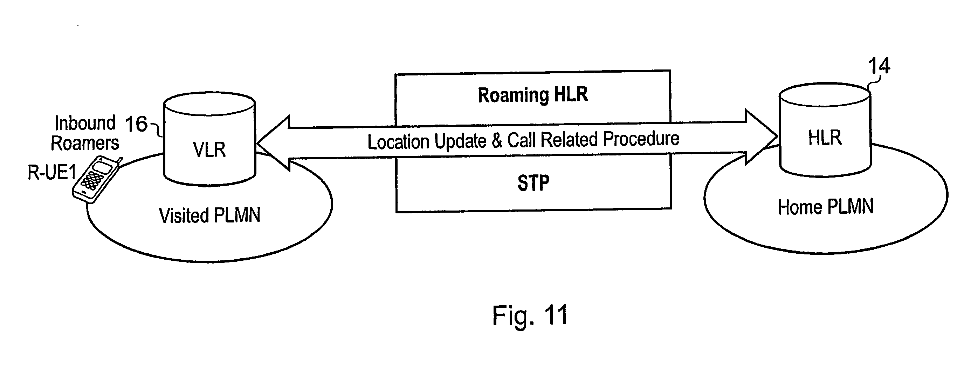

A further example application of the roaming home location server 22 is illustrated in Figure 11. Since the roaming home location server 22 receives signalling data communicated between the visited mobile network and the home location register 14 the roaming home location server 22 can be arranged to monitor the signalling data and to generate statistics relating to the signalling data. Mobile Application Part (MAP) and CAMEL Application Part (CAP) could be used in order to build statistics. For example, based on MAP, the number of visitors located on the visited mobile network can be generated, the number of user equipment using the USSD bearer, the number of location based services provided by the visited mobile network and the number of traffic redirections which are performed by the home mobile network. Moreover, it is possible to provide such statistic per roaming user by filling in real time the inbound roaming database. Based on MAP, statistics per roaming user could be provided on the usage of speech terminating calls, USSD, SMS, LBS, Traffic steering. Based on CAP, statistics per roaming user could be provided on the usage of speech originating and terminating calls. Such statistics per roaming user could be reused in the traffic steering algorithm, in order to keep on the visited network the roaming users with the high average revenues.

### Summary of Applications

Examples of operations which can be performed by a roaming mobile home location server are summarised in the following paragraphs:

A roaming home location server can provide various services to a roaming mobile user equipment. The roaming home location server may include a data base layer, a service layer and a signalling layer. The data base layer is operable to receive and to store subscriber information data communicated with signalling data between a home location server of a first home mobile radio network and a visitor location server of a second visited mobile network. The signalling data is associated with informing the home location server of the location of a mobile user equipment which has roamed to the second mobile network. The service layer is operable to generate additional signalling data for communication to at least one of the home location server and the visitor location server to provide the service to the mobile user equipment in accordance with the subscriber information data stored in the data base layer. The signalling layer is operable to receive the signalling data providing the subscriber information data and to communicate the additional signalling data. The service provided to the roaming user equipment is dependent upon the subscriber information data retrieved from the home location server and stored in the data base layer.

The roaming home location server includes a service layer for providing enhanced services to a roaming mobile user equipment in accordance with subscriber information received and stored in a database layer. According to the arrangement disclosed in EP 1 379 096, only a relatively simple route optimisation process is performed in which routing information for completing a call initiated by a calling terminal is provided by the roaming home location server within the visited mobile network (called OR-DB). The roaming home location server is arranged to provide services to the mobile user equipment in accordance with the subscriber information provided from the database. For the example of route optimisation, the subscriber information may include conditions for providing routing information data for establishing the call to the roaming mobile user equipment. The conditions may include at least one of whether the roaming home location server of the visited mobile network is permitted to provide the data for establishing the call, or whether the calling terminal and the roaming user equipment are located within the same country.

In other examples, the subscriber information data may include service related information providing service limitation or inducing new services which can be placed by the roaming user equipment. As such, for example, the barring service related information may be adapted to bar calls being made to premium rate services to control fraud). The service related information may also induce new services like CAMEL triggering to control in real time billing for calls originated by the roaming user equipment.

In one example, the service provided to the roaming user equipment may include delivering a short data message (SMS) from the calling terminal to the roaming user equipment. For this example, the service logic is operable to retrieve subscriber information data for delivering the data message from the database layer and to deliver the data message to the roaming user equipment.

In another example, the visited mobile network may include an unstructured supplementary service data server. The roaming home location server may be operable to receive an unstructured supplementary service data message from the roaming mobile user equipment and to communicate the unstructured supplementary service data message depending upon a string value provided with the unstructured supplementary service data message.

In another example, the visited mobile network includes a location based services server operable to generate location relevant messages for mobile user equipment in dependence upon the location of the mobile user equipment. The location based server generates a location interrogation message representing a request for a current location of the roaming mobile user equipment and communicates the location interrogation message to the roaming home location server. The roaming home location server is operable to determine from the subscriber information data stored in the database layer whether the roaming mobile user equipment is authorised to receive location based services, and whether the roaming mobile user equipment is affiliated with the second visited mobile network. If the roaming mobile user equipment is affiliated with the second visited mobile network and is authorised to receive location based services, the roaming home location server is operable to communicate a provide subscriber information signalling message to the visited location server of the second visited mobile network. The visited location server is responsive to the provide subscriber information to provide the location information to the roaming home location server, which communicates the location information to the location based services server for delivering the location relevant message.

Various modifications and adaptations of the embodiments herein before described may be made without departing from the scope of the present invention. For example as indicated above, although the above example embodiments have been described with reference to the GSM standard, it will be appreciated that the present invention is not limited to GSM and may be extended to other mobile telecommunications standards and systems, such as UMTS and TD-SCDMA.

## Claims

1. A telecommunications system comprising a first home mobile radio network and a second visited mobile radio network, the first home mobile radio network including a home location server (14) operable to maintain subscriber information data identifying mobile user equipment which have subscribed to the first home mobile radio network, and the second visited mobile radio network including a visitor location server (16) operable to maintain data identifying mobile user equipment which have roamed to the second visited mobile network, the system including a roaming home location server (22), the roaming home location server (22) being operable
to receive signalling data communicated between the home location server (14) of the first home mobile radio network and the visitor location server (16) of the second visited mobile network, the signalling data being associated with informing the home location server (14) of the location of a mobile user equipment which has roamed from the first home mobile network to the second visited mobile network wherein the signalling data received by the roaming home location server (22) from the visitor location server (16) of the second visited mobile network includes a request to register the roaming user equipment with the visitor location server (16) of the second visited mobile network, the roaming home location server (22) being operable
to generate request signalling data representing the request to register the roaming mobile user equipment with the visitor location server (16) of the second visited mobile network and to communicate the request signalling data to the home location server (14) of the first home mobile radio network, and in response to rejection signalling data representing a rejection of the request to register the roaming mobile user equipment with the visitor location server (16) of the second visited mobile network, to generate further request signalling data which has an effect of causing the home location server (14) of the first home mobile network to accept the registration of the roaming mobile user equipment with the visitor location register (22) of the second visited mobile radio network.

2. A telecommunications system as claimed in Claim 1, wherein the further request signalling data includes the request signalling data, the roaming home location server (22) being operable to communicate the request signalling data repeatedly.

3. A telecommunications system as claimed in Claim 2, wherein the request signalling data is communicated repeatedly to the home location server until the home location server (14) accepts the registration of the roaming mobile user equipment with visitor location server (16) of the visited mobile network.

4. A telecommunications system as claimed in Claim 2, wherein the request signalling data is communicated a predetermined number of times.

5. A method of registering a mobile user equipment which has roamed from a first home mobile radio network to a second visited mobile radio network, the first home mobile radio network including a home location server (14) operable to maintain subscriber information data identifying mobile user equipment which have subscribed to the first home mobile radio network, and the second visited mobile radio network including a visitor location server (16) operable to maintain data identifying mobile user equipment which have roamed to the second visited mobile network, the method comprising
receiving signalling data communicated between the home location server (14) of the first home mobile radio network and the visitor location server (16) of the second visited mobile network, the signalling data being associated with informing the home location server (14) of the location of a mobile user equipment which has roamed from the first home mobile network to the second mobile network, the signalling data received by the roaming home location server (22) from the visitor location server (16) of the second visited mobile network including a request to register the roaming user equipment with the visitor location server (16) of the second visited mobile network,
generating request signalling data representing the request to register the roaming mobile user equipment with the visitor location server (16) of the second visited mobile network,
communicating the request signalling data to the home location server (14) of the first home mobile radio network, and in response to rejection signalling data representing a rejection of the request to register the roaming mobile user equipment with the visitor location server (16) of the second visited mobile network, and
generating further request signalling data which has an effect of causing the home location server (14) of the first home mobile network to accept the registration of the roaming mobile user equipment with the visitor location register (16) of the second visited mobile radio network.

6. A method as claimed in Claim 5, wherein the generating the further request signalling data includes
communicating the request signalling data repeatedly, the request signalling data being communicated repeatedly to the home location server (14) until the home location server (14) accepts the registration of the roaming mobile user equipment with visitor location server (16) of the visited mobile network.

7. A method as claimed in Claim 6, wherein the generating the further request signalling data includes
communicating the request signalling data a predetermined number of times in response to the rejection signalling data.

8. A roaming home location server operable
to receive signalling data communicated between a home location server (14) of a first home mobile radio network and a visitor location server (16) of a second visited mobile network, the received signalling data being associated with informing the home location server (14) of the location of a mobile user equipment which has roamed from the first home mobile radio network to the second visited mobile network, wherein the signalling data received by the roaming home location server (14) from the visitor location server (16) of the second visited mobile network includes a request to register the roaming user equipment with the visitor location server (16) of the second visited mobile network, and
to generate request signalling data representing the request to register the roaming mobile user equipment with the visitor location server (16) of the second visited mobile network and to communicate the request signalling data to the home location server (14) of the first home mobile radio network, and in response to rejection signalling data representing a rejection of the request to register the roaming mobile user equipment with the visitor location server (16) of the second visited mobile network, to generate further request signalling data which has an effect of causing the home location server (14) of the first home network to accept the registration of the roaming mobile user equipment with the visitor location register (16) of the second visited mobile radio network.

9. A roaming home location server as claimed in Claim 8, wherein the further request signalling data includes the request signalling data, the roaming home location server (22) being operable to communicate the request signalling data repeatedly.

10. A roaming home location server as claimed in Claim 9, wherein the request signalling data is communicated repeatedly to the home location server (14) until the home location server (14) accepts the registration of the roaming mobile user equipment with visitor location server (16) of the second visited mobile network.

11. A roaming home location server as claimed in Claim 9, wherein the request signalling data is communicated a predetermined number of times.

12. A computer program providing computer executable instructions which when run on a computer causes the computer to perform the method according to any of Claims 5 to 7.

13. A data carrier having a recording medium, the recording medium having recorded thereon a computer program according to Claim 12.

## Patentansprüche

1. Telekommunikationssystem, das ein erstes Heimatmobilfunknetz und ein zweites Aufenthaltsmobilfunknetz umfasst, wobei das erste Heimatmobilfunknetz einen Heimatort-Server (14), der betreibbar ist, um Teilnehmerinformationsdaten zu halten, die ein mobiles Anwendergerät identifizieren, das an dem ersten Heimatmobilfunknetz teilnimmt, enthält und das zweite Aufenthaltsmobilfunknetz einen Besucherort-Server (16), der betreibbar ist, um Daten zu halten, die ein mobiles Anwendergerät identifizieren, das zu dem zweiten Aufenthaltsmobilnetz gewandert ist, enthält, wobei das System einen wandernden Heimatort-Server (22) enthält, wobei der wandernde Heimatort-Server (22) betreibbar ist,
um Meldedaten zu empfangen, die zwischen dem Heimatort-Server (14) des ersten Heimatmobilfunknetzes und dem Besucherort-Server (16) des zweiten Aufenthaltsmobilnetzes übermittelt werden, wobei die Meldedaten vorgesehen sind, um den Heimatort-Server (14) über den Ort eines mobilen Anwendergeräts zu informieren, das von dem ersten Heimmobilnetz zu dem zweiten Aufenthaltsmobilnetz gewandert ist, wobei die Meldedaten, die durch den wandernden Heimatort-Server (22) von dem Besucherort-Server (16) des zweiten Aufenthaltsmobilnetzes empfangen werden, eine Anforderung enthalten, das wandernde Anwendergerät in dem Besucherort-Server (16) des zweiten mobilen Aufenthaltsmobilnetzes zu registrieren, wobei der wandernde Heimatort-Server (22) betreibbar ist,
um Anforderungsmeldedaten zu erzeugen, die die Anforderung repräsentieren, das wandernde mobile Anwendergerät in den Besucherort-Server (16) des zweiten mobilen Aufenthaltsmobilnetzes zu registrieren und die Anforderungsmeldedaten an den Heimatort-Server (14) des ersten Heimatmobilfunknetzes zu übermitteln und in Reaktion auf die Zurückweisung der Meldedaten, die eine Zurückweisung der Anforderung repräsentieren, das wandernde mobile Anwendergerät in dem Besucherort-Server (16) des zweiten Aufenthaltsmobilnetzes zu registrieren, weitere Anforderungsmeldedaten zu erzeugen, die bewirken, dass der Heimatort-Server (14) des ersten Heimmobilnetzes die Registrierung des wandernden mobilen Anwenderendgeräts in dem Besucherortsregister (22) des zweiten Aufenthaltsmobilfunknetzes akzeptiert.

2. Telekommunikationssystem nach Anspruch 1, wobei die weiteren Meldedaten Anforderungsmeldedaten enthalten und der wandernde Heimatort-Server (22) betreibbar ist, um die Anforderungsmeldedaten wiederholt zu übermitteln.

3. Telekommunikationssystem nach Anspruch 2, wobei die Anforderungsmeldedaten wiederholt an den Heimatort-Server übermittelt werden, bis der Heimatort-Server (14) die Registrierung des wandernden mobilen Anwendergeräts in dem Besucherort-Server (16) des Aufenthaltsmobilnetzes akzeptiert.

4. Telekommunikationssystem nach Anspruch 2, wobei die Anforderungsmeldedaten in einer vorgegebenen Anzahl übermittelt werden.

5. Verfahren zum Registrieren eines mobilen Anwendergeräts, das von einem ersten Heimatmobilfunknetz zu einem zweiten Aufenthaltsmobilfunknetz gewandert ist, wobei das erste Heimatmobilfunknetz einen Heimatort-Server (14) enthält, der betreibbar ist, um Teilnehmerinformationsdaten zu halten, die ein mobiles Anwendergerät identifizieren, das an dem ersten Heimatmobilfunknetz teilnimmt, und das zweite mobile Aufenthaltsmobilfunknetz einen Besucherort-Server (16) enthält, der betreibbar ist, um Daten zu halten, die ein mobiles Anwendergerät identifizieren, das in das zweite Aufenthaltsmobilnetz gewandert ist, wobei das Verfahren enthält:
Empfangen von Meldedaten, die zwischen dem Heimatort-Server (14) des ersten Heimatmobilfunknetzes und dem Besucherort-Server (16) des zweiten Aufenthaltsmobilnetzes ausgetauscht werden, wobei die Meldedaten dazu vorgesehen sind, den Heimatort-Server (14) über den Ort eines mobilen Anwendergeräts zu informieren, das von dem ersten Heimmobilnetz in das zweite Mobilnetz gewandert ist, wobei die Meldedaten, die durch den wandernden Heimatort-Server (22) von dem Besucherort-Server (16) des zweiten Aufenthaltsmobilnetzes empfangen werden, eine Anforderung enthalten, das wandernde Anwendergerät in dem Besucherort-Server (16) des zweiten Aufenthaltsmobilnetzes zu registrieren,
Erzeugen von Anforderungsmeldedaten, die die Anforderung repräsentieren, das wandernde mobile Anwendergerät in dem Besucherort-Server (16) des zweiten Aufenthaltsmobilnetzes zu registrieren,
Übermitteln der Anforderungsmeldedaten an den Heimatort-Server (14) des ersten Heimatmobilfunknetzes und in Reaktion auf Zurückweisungsmeldedaten, die eine Zurückweisung der Anforderung repräsentieren, das wandernde mobile Anwendergerät in dem Besucherort-Server (16) des zweiten Aufenthaltsmobilnetzes zu registrieren,
Erzeugen weiterer Anforderungsmeldedaten, die bewirken, dass der Heimatort-Server (14) des ersten Heimmobilnetzes die Registrierung des wandernden mobilen Anwendergeräts in dem Besucherort-Register (16) des zweiten mobilen Aufenthaltsmobilfunknetzes akzeptiert.

6. Verfahren nach Anspruch 5, wobei das Erzeugen der weiteren Anforderungsmeldedaten enthält:
wiederholtes Übermitteln der Anforderungsmeldedaten, wobei die Anforderungsmeldedaten wiederholt an den Heimatort-Server (14) übermittelt werden, bis der Heimatort-Server (14) die Registrierung des wandernden mobilen Anwendergeräts in dem Besucherort-Server (16) des Aufenthaltsmobilnetzes akzeptiert.

7. Verfahren nach Anspruch 6, wobei das Erzeugen der weiteren Anforderungsmeldedaten enthält:
Übermitteln der Anforderungsmeldedaten in einer vorgegebenen Anzahl in Reaktion auf die Zurückweisungsmeldedaten.

8. Wandernder Heimatort-Server, der betreibbar ist,
um Meldedaten zu empfangen, die zwischen einem Heimatort-Server (14) eines ersten Heimmobilfunknetzes und einem Besucherort-Server (16) eines zweiten Aufenthaltsmobilnetzes ausgetauscht werden, wobei die empfangenen Meldedaten dazu vorgesehen sind, den Heimatort-Server (14) über den Ort eines mobilen Anwendergeräts zu informieren, das von dem ersten Heimmobilfunknetz zu dem zweiten Aufenthaltsmobilnetz gewandert ist, wobei die Meldedaten, die durch den wandernden Heimatort-Server (14) von dem Besucherort-Server (16) des zweiten Aufenthaltsmobilnetzes empfangen werden, eine Anforderung enthalten, das wandernde Anwendergerät in dem Besucherort-Server (16) des zweiten Aufenthaltsmobilnetzes zu registrieren, und
Anforderungsmeldedaten zu erzeugen, die die Anforderung repräsentieren, das wandernde mobile Anwendergerät in dem Besucherort-Server (16) des zweiten Aufenthaltsmobilnetzes zu registrieren und die Anforderungsmeldedaten an den Heimatort-Server (14) des ersten Heimmobilfunknetzes zu übermitteln und in Reaktion auf Zurückweisungsmeldedaten, die eine Zurückweisung der Anforderung repräsentieren, das wandernde mobile Anwendergerät in dem Besucherort-Server (16) des zweiten Aufenthaltsmobilnetzes zu registrieren, weitere Anforderungsmeldedaten zu erzeugen, die bewirken, dass der Heimatort-Server (14) des ersten Heimmobilnetzes die Registrierung des wandernden mobilen Anwendergeräts in dem Besucherort-Register (16) des zweiten Aufenthaltsmobilfunknetzes akzeptiert.

9. Wandernder Heimatort-Server nach Anspruch 8, wobei die weiteren Anforderungsmeldedaten die Anforderungsmeldedaten enthalten, wobei der wandernde Heimatort-Server (22) betreibbar ist, um die Anforderungsmeldedaten wiederholt zu übermitteln.

10. Wandernder Heimatort-Server nach Anspruch 9, wobei die Anforderungsmeldedaten wiederholt an den Heimatort-Server (14) übermittelt werden, bis der Heimatort-Server (14) die Registrierung des wandernden mobilen Anwendergeräts in dem Besucherort-Server (16) des zweiten Aufenthaltsmobilnetzes akzeptiert.

11. Wandernder Heimatort-Server nach Anspruch 9, wobei die Anforderungsmeldedaten in einer vorgegebenen Anzahl übermittelt werden.

12. Computerprogramm, das durch einen Computer ausführbare Befehle bereitstellt, die dann, wenn sie auf einem Computer ausgeführt werden, den Computer dazu veranlassen, das Verfahren nach einem der Ansprüche 5 bis 7 auszuführen.

13. Datenträger mit einem Aufzeichnungsmedium, wobei auf das Aufzeichnungsmedium ein Computerprogramm nach Anspruch 12 aufgezeichnet ist.

## Revendications

1. Système de télécommunications comprenant un premier réseau radio mobile domestique et un second réseau radio mobile visité, le premier réseau radio mobile domestique comportant un serveur domestique de position (14) exploitable pour tenir à jour des données d'informations d'abonnés qui identifient des équipements d'utilisateurs mobiles qui ont souscrit au premier réseau radio mobile domestique, et le second réseau radio mobile visité comportant un serveur de position visitée (16) exploitable pour tenir à jour des données qui identifient des équipements d'utilisateurs mobiles qui sont passés dans le second réseau radio mobile visité, le système comportant un serveur domestique de position pour abonnés itinérants (22), le serveur domestique de position pour abonnés itinérants (22) étant exploitable
pour recevoir des données de signalisation communiquées entre le serveur domestique de position (14) du premier réseau radio mobile domestique et le serveur de position visitée (16) du second réseau mobile visité, les données de signalisation étant associées à la notification au serveur domestique de position (14) de la position d'un équipement d'utilisateur mobile qui est passé du premier réseau mobile domestique au second réseau mobile visité, dans lequel les données de signalisation reçues par le serveur domestique de position pour abonnés itinérants (22) depuis le serveur de position visite (16) du second réseau radio mobile visité comporte une requête d'enregistrement de l'équipement d'utilisateur itinérant auprès du serveur de position visitée (16) du second réseau mobile visité, le serveur domestique de position pour abonnés itinérants (22) étant exploitable
pour générer des données de signalisation de requête représentant la requête d'enregistrement de l'équipement d'utilisateur mobile auprès du serveur de position visitée (16) du second réseau mobile visité et communiquer les données de signalisation de requête au serveur domestique de position (14) du premier réseau radio mobile domestique, et en réponse à des données de signalisation de rejet représentant un rejet de la requête d'enregistrement de l'équipement d'utilisateur mobile itinérant auprès du serveur de position visitée (16) du second réseau mobile visité, générer d'autres données de signalisation de requête qui ont pour effet d'amener le serveur domestique de position (14) du premier réseau mobile domestique à accepter l'enregistrement de l'équipement d'utilisateur mobile auprès de l'enregistreur de position visitée (22) du second réseau radio mobile visité.

2. Système de télécommunications selon la revendication 1, dans lequel les autres données de signalisation de requête comportent les données de signalisation de requête, le serveur domestique de position pour abonnés itinérants (22) étant exploitable pour communiquer les données de signalisation de requête de façon répétée.

3. Système de télécommunications selon la revendication 2, dans lequel les données de signalisation de requête sont communiquées de façon répétée au serveur domestique de position jusqu'à ce que le serveur domestique de position (14) accepte l'enregistrement de l'équipement d'utilisateur mobile itinérant auprès du serveur de position visitée (16) du réseau mobile visité.

4. Système de télécommunications selon la revendication 2, dans lequel les données de signalisation de requête sont communiquées un nombre de fois prédéterminé.

5. Procédé d'enregistrement d'un équipement d'utilisateur mobile qui est passé d'un premier réseau radio mobile domestique à un second réseau radio mobile visité, le premier réseau radio mobile domestique comportant un serveur domestique de position (14) exploitable pour tenir à jour des données d'informations d'abonnés qui identifient des équipements d'utilisateurs mobiles qui ont souscrit au premier réseau radio mobile domestique, et le second réseau radio mobile visité comportant un serveur de position visitée (16) exploitable pour tenir à jour des données qui identifient des équipements d'utilisateurs mobiles qui sont passés dans le second réseau radio mobile visité, le procédé comprenant
la réception de données de signalisation communiquées entre le serveur domestique de position (14) du premier réseau radio mobile domestique et le serveur de position visitée (16) du second réseau mobile visité, les données de signalisation étant associées à la notification au serveur domestique de position (14) de la position d'un équipement d'utilisateur mobile qui est passé du premier réseau mobile domestique au second réseau mobile, les données de signalisation reçues par le serveur domestique de position pour abonnés itinérants (22) depuis le serveur de position visite (16) du second réseau mobile visité comportant une requête d'enregistrement de l'équipement d'utilisateur itinérant auprès du serveur de position visitée (16) du second réseau mobile visité,
la génération de données de signalisation de requête représentant la requête d'enregistrement de l'équipement d'utilisateur mobile auprès du serveur de position visitée (16) du second réseau mobile visité,
la communication des données de signalisation de requête au serveur domestique de position (14) du premier réseau radio mobile domestique, et en réponse à des données de signalisation de rejet représentant un rejet de la requête d'enregistrement de l'équipement d'utilisateur mobile itinérant auprès du serveur de position visitée (16) du second réseau mobile visité, et
la génération d'autres données de signalisation de requête qui ont pour effet d'amener le serveur domestique de position (14) du premier réseau mobile domestique à accepter l'enregistrement de l'équipement d'utilisateur mobile auprès de l'enregistreur de position visitée (16) du second réseau radio mobile visité.

6. Procédé selon la revendication 5, dans lequel la génération des autres données de signalisation de requête comporte
la communication des données de signalisation de requête de façon répétée, les données de signalisation de requête étant communiquées de façon répétée au serveur domestique de position (14) jusqu'à ce que le serveur domestique de position (14) accepte l'enregistrement de l'équipement d'utilisateur mobile itinérant auprès du serveur de position visitée (16) du réseau mobile visité.

7. Procédé selon la revendication 6, dans lequel la génération des autres données de signalisation de requête comporte
la communication des données de signalisation de requête un nombre de fois prédéterminé en réponse aux données de signalisation de rejet.

8. Serveur domestique de position pour abonnés itinérants exploitable
pour recevoir des données de signalisation communiquées entre un serveur domestique de position (14) du premier réseau radio mobile domestique et un serveur de position visitée (16) d'un second réseau mobile visité, les données de signalisation étant associées à la notification au serveur domestique de position (14) de la position d'un équipement d'utilisateur mobile qui est passé du premier réseau mobile domestique au second réseau mobile visité, dans lequel les données de signalisation reçues par le serveur domestique de position pour abonnés itinérants (14) depuis le serveur de position visite (16) du second réseau mobile visité comportent une requête d'enregistrement de l'équipement d'utilisateur itinérant auprès du serveur de position visitée (16) du second réseau mobile visité, et
pour générer des données de signalisation de requête représentant la requête d'enregistrement de l'équipement d'utilisateur mobile auprès du serveur de position visitée (16) du second réseau mobile visité et communiquer les données de signalisation de requête au serveur domestique de position (14) du premier réseau radio mobile domestique, et en réponse à des données de signalisation de rejet représentant un rejet de la requête d'enregistrement de l'équipement d'utilisateur mobile itinérant auprès du serveur de position visitée (16) du second réseau mobile visité, générer d'autres données de signalisation de requête qui ont pour effet d'amener le serveur domestique de position (14) du premier réseau domestique à accepter l'enregistrement de l'équipement d'utilisateur mobile auprès de l'enregistreur de position visitée (16) du second réseau radio mobile visité.

9. Serveur domestique de position pour abonnés itinérants selon la revendication 8, dans lequel les autres données de signalisation de requête comportent les données de signalisation de requête, le serveur domestique de position pour abonnés itinérants (22) étant exploitable pour communiquer les données de signalisation de requête de façon répétée.

10. Serveur domestique de position pour abonnés itinérants selon la revendication 9, dans lequel les données de signalisation de requête sont communiquées de façon répétée au serveur domestique de position (14) jusqu'à ce que le serveur domestique de position (14) accepte l'enregistrement de l'équipement d'utilisateur mobile itinérant auprès du serveur de position visitée (16) du second réseau mobile visité.

11. Serveur domestique de position pour abonnés itinérants selon la revendication 9, dans lequel les données de signalisation de requête sont communiquées un nombre de fois prédéterminé.

12. Programme informatique fournissant des instructions exécutables par ordinateur qui, quand elles sont exécutées sur un ordinateur, amènent l'ordinateur à exécuter le procédé selon l'une quelconque des revendications 5 à 7.

13. Support de données ayant un support d'enregistrement, un programme informatique selon la revendication 12 étant enregistré sur le support d'enregistrement.
